# EUROPÄISCHE PATENTANMELDUNG

(11) **EP 3 699 456 A1**
(43) Veröffentlichungstag der Anmeldung: **26.08.2020**
(21) Anmeldenummer: 19158538.9
(22) Anmeldetag: 21.02.2019
(51) Int. Cl.: F16H 19/00, F16H 33/02, F16H 35/00, F03G 1/02, F24F 13/14

(54) **STELLANTRIEB MIT EINER VORZUGSWEISE ALS KONSTANTKRAFTFEDER AUSGEBILDETEN, DIREKT AUF EINEN STELLANSCHLUSS DES STELLANTRIEBS EINWIRKENDEN BANDFEDER ALS RÜCKSTELLFEDER**

(71) Anmelder: Siemens Schweiz AG, 8047 Zürich (CH)
(72) Erfinder: Konrad, Hilmar, 6340 Baar (CH); Schilter, Felix, 6460 Altdorf (CH)
(74) Vertreter: Maier, Daniel Oliver

(57) **Zusammenfassung**

Die vorliegende Erfindung betrifft einen Stellantrieb (1), aufweisend ein Antriebselement, ein Getriebe (G) sowie ein Stellelement (10) mit einem Stellanschluss (AN). Das Antriebselement ist zum Antreiben des Stellelements um eine Stellachse (A) vorgesehen und durch das Getriebe mechanisch mit dem Stellelement wirkverbunden. Der Stellantrieb weist eine am Stellelement angreifende Rückstellfeder (2, 2') auf, welche mit dem Stellelement zum Bereitstellen eines auf dieses einwirkenden Rückstellmoments (M) mechanisch wirkverbunden ist. Das Stellelement umfasst in kennzeichnender Weise einen zur Stellachse zentrisch angeordneten und in tangentialer Umfangsrichtung zumindest teilweise umlaufenden Wellenabschnitt (3). Die Rückstellfeder umfasst eine Bandfeder, vorzugsweise eine als Bandrolle ausgebildete Konstantkraftfeder. Es ist tangential an dem Wellenabschnitt ein freies Federende (E) der Bandfeder befestigt. Im Besonderen ist das freie Federende an einem am radialen Aussenumfang des Wellenabschnitts gelagerten Scharnier (4) befestigt, welches um eine parallel zur Stellachse verlaufende Schwenkachse drehbar ist. Dadurch ist vorteilhaft die Wirkdrehrichtung des Rückstellmoments umkehrbar.

## Beschreibung

Die Erfindung betrifft einen Stellantrieb, aufweisend ein Antriebselement, ein Getriebe sowie ein Stellelement mit einem Stellanschluss. Das Antriebselement ist zum Antreiben des Stellelements um eine Stellachse vorgesehen. Ferner ist das Antriebselement durch das Getriebe mechanisch mit dem Stellelement wirkverbunden. Der Stellantrieb weist weiterhin eine am Stellelement angreifende Rückstellfeder auf, welche mit dem Stellelement zum Bereitstellen eines auf das Stellelement einwirkenden Rückstellmoments mechanisch wirkverbunden ist.

Das Antriebselement ist zumeist ein Elektromotor. Alternativ kann dieses ein hydraulischer oder pneumatischer Aktor sein. Das Getriebe ist vorzugsweise ein Untersetzungsgetriebe.

Ein derartiger Stellantrieb ist dafür vorgesehen, um z.B. eine am Stellanschluss angeschlossene Klappe oder ein dort angeschlossenes Ventil anzutreiben, insbesondere zum Heizen, Lüften oder Klimatisieren eines Gebäudes. Auch eine zumindest teilweise Integration des Stellelements in eine Klappe bzw. in ein Ventil ist denkbar.

Bei den im Rahmen der Erfindung betrachteten Stellantrieben ist das Stellelement innerhalb eines vorgegebenen Drehwinkelbereichs zwischen einer Ruhestellung (Startposition) und einer Betätigungsstellung (Endposition) um seine Stellachse drehbar angeordnet. Der maximale Stellwinkelbereich zwischen diesen beiden Drehstellungen liegt vorzugsweise bei 90° ± 10°. Beide Drehstellungen bilden üblicherweise auch Endanschläge. Bevorzugt kann die Ruhestellung ferner derart vorgesehen sein, dass der Stellantrieb in diese mittels der vorgespannten Rückstellfeder selbsttägig zurückgestellt wird, sobald sich der Stellantrieb im stromlosen Zustand befindet. Wie oben bereits ausgeführt, können derartige Stellantriebe oftmals in Anlagen für die Heizung, Lüftung oder Kühlung in einem Gebäude eingesetzt werden. Daher ist eine häufige Anforderung, dass solche Stellantriebe zuverlässig, beständig, preiswert, kompakt und in grossem Volumen herstellbar sind.

In der Veröffentlichung der US-Patentanmeldung 2014/345400 A1 ist die Verwendung einer massiven zylindrischen Schraubenfeder als Rückstellfeder beschrieben, die koaxial zum Stellanschluss angeordnet ist und diesen im Reversbetrieb direkt zurück verfährt. Eine solche Schraubenfeder weist jedoch eine sehr "harte" steile Kennlinie auf. Um die Steilheit zu kompensieren, ist dem Stellanschluss eine kombinierte Zahnradkombination aus einem spiralförmigen, unrunden Zahnrad und aus einem dazu axial beabstandeten, fest damit verbundenen kreisrunden Zahnrad vorgeschaltet. Das unrunde Zahnrad ist dabei im Eingriff mit einem gleichfalls spiralförmigen, unrunden Zahnsegment des Stellanschlusses. Die gezeigte Zahnradkombination sowie der Stellanschluss erfordern eine mechanisch schwere, massive Ausführung bei sehr hoher Bautiefe.

Weiterhin ist die Verwendung einer vorgespannten Triebfeder als Rückstellfeder für einen Stellantrieb bekannt. Die Triebfeder umfasst eine Vielzahl von Windungen, wie z.B. im Bereich von 15 bis 50 Windungen. Dadurch weist die Triebfeder eine weiche, d.h. "flache" Federkennlinie, auf, um in etwa einen linearen Kraftverlauf zu erzielen. Zwischen dem Stellanschluss eines Stellantriebs und einem antreibenden Motor ist typischerweise ein Reduziergetriebe mit mehreren Zahnrädern geschaltet. Die Triebfeder ist koaxial zu einem Zahnrad des Reduziergetriebes angeordnet, wobei dieses Zahnrad dann über zumindest ein weiteres nachgeschaltetes Zahnrad des Reduziergetriebes auf den Stellanschluss einwirkt. Dabei wirkt das erste Federende der Triebfeder auf dieses Zahnrad ein, während das zweite Federende der Triebfeder als Drehmomentstütze am Gehäuse oder mit einem festen Bauteil des Gehäuses des Stellantriebs verbunden ist. Mittels der Triebfeder verfährt der Stellanschluss relativ gleichmässig in die Ruhestellung zurück. Allerdings ist eine solche Triebfeder mit der Vielzahl von Windungen technisch aufwändig und schwer.

Es ist daher Aufgabe der vorliegenden Erfindung, die voranstehend beschriebenen Nachteile bei Stellantrieben zumindest teilweise zu beheben.

Es ist eine weitere Aufgabe der Erfindung einen Stellantrieb anzugeben, der hinsichtlich der Rückstellfeder einen konstruktiv einfacheren Aufbau aufweist und zudem leichter ist.

Es ist schliesslich eine weitere Aufgabe der Erfindung, einen flexibler einsetzbaren Stellantrieb anzugeben.

Die Aufgabe der Erfindung wird durch die Merkmale des Hauptanspruchs gelöst. Vorteile und Ausgestaltungen der Erfindung, die einzeln oder in Kombination miteinander einsetzbar sind, sind Gegenstand der abhängigen Ansprüche.

Erfindungsgemäss weist das Stellelement einen zur Stellachse zentrisch angeordneten und in tangentialer Umfangsrichtung zumindest teilweise umlaufenden Wellenabschnitt auf. Die Rückstellfeder umfasst eine Bandfeder, deren freies Federende tangential an dem Wellenabschnitt befestigt ist. Insbesondere ist die Rückstellfeder die Bandfeder selbst. Die Bandfeder weist zwei Bandfederenden auf, die sich entlang der linearen Längserstreckung der Bandfeder gegenüberliegen. Das freie Federende der Bandfeder ist radial aussenliegend angeordnet.

Das freie, radial aussenliegende Bandfederende ist am Umfang des Wellenabschnitts, vorzugsweise beweglich mit wenig Spiel daran befestigt. Es greift somit direkt am Wellenumfang ein.

Im Gegensatz zur Triebfedern ist bei der vorliegenden Erfindung das zweite Federende der Bandfeder nicht "gehäusefest". Die Triebfeder kann z.B. auf einer Trommel gewickelt sein, um ein Abrollen des freien, radial aussenliegenden Federendes durch den Wellenabschnitt des Stellelements zu ermöglichen. Dagegen wirkt typischerweise das zentral, radial innenliegende Federende der Triebfeder direkt auf eine Welle, während das radial aussenliegende Federende als Stützlager fest mit dem Gehäuse oder einem Gehäuseteil verbunden ist.

Durch den direkten Eingriff der Bandfeder am Stellelement ist vorteilhaft ein besonders kompakter Aufbau des Stellantriebs bei zugleich geringer Bauhöhe möglich. Zugleich sind die verbleibenden Zahnräder des (Reduzier-)getriebes trotz vorgespannter Rückstellfeder vorteilhaft ohne Belastung.

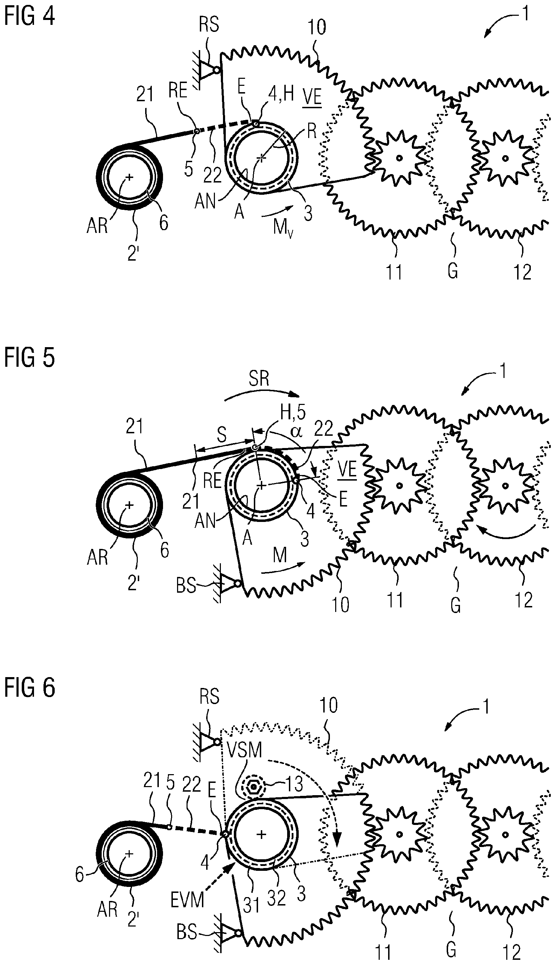

Ein besonderer Vorteil besteht darin, dass durch die Befestigung des freien Bandfederendes am Wellenabschnitt eine besonders einfache Umkehrung der Drehrichtung des Stellantriebs (Link-/Rechtslauf) mit einer einhergehenden Umkehrung des Rückstellmoments möglich ist (siehe FIG 4 - FIG 7). Denn häufig wird die Einbaurichtung eines Stellantriebs bei der Montage verwechselt, da ein Stellantrieb je nach Einbausituation (Anschlag rechts oder links) entsprechend einzubauen ist (Oberseite oder Unterseite). In einem solchen Fall muss dann der Stellantrieb ausgebaut und wieder umgekehrt eingebaut werden. Das ist nachteilig mühsam und zeitaufwändig.

Mittels der einzigen Bandfeder sind vorteilhaft sowohl ein annähernd gleichmässiger Rücklauf des Stellantriebs im Reversbetriebs also auch eine einfache Umkehrung der Drehrichtung und des Rückstellmoments möglich.

Der Stellwinkelbereich zwischen zwei Drehstellungen liegt vorzugsweise bei 90° ± 10°. Da das freie Federende der Bandfeder beim Verfahren des Stellelements in die Betätigungsstellung jedoch entlang des umlaufenden Wellenabschnitts aufgewickelt wird, kann der maximal mögliche Stellwinkelbereich vorteilhaft mehrere Umdrehungen umfassen, d.h. bis zu 360°, 720°, 1080° etc..

Die Bandfeder kann z.B. eine als Bandrolle ausgebildete Triebfeder sein, vorzugsweise mit 5 bis 10 Windungen. In diesem Fall liegt das freie Federende radial aussenliegend, während das zentral, radial innenliegende Federenden fest mit einem gehäusefesten Bolzen oder mit einer gehäusefesten Achse als Drehmomentstütze verbunden ist. Eine derartige Triebfeder weist insbesondere eine Federhärte auf, die sich zwischen der Betätigungs- und Ruhestellung des Stellantriebs um maximal 10%, vorzugsweise maximal 5%, unterscheidet.

Alternativ kann die Rückstellfeder eine Spiralfeder sein, wie z.B. eine Schraubenfeder. Eine derartige Spiral- oder Schraubenfeder weist insbesondere eine Federhärte auf, die sich zwischen der Betätigungs- und Ruhestellung des Stellantriebs um mindestens 20%, vorzugsweise um mindestens 40%, unterscheidet. Vorzugsweise weist dann das Stellelement einen zur Stellachse zentrisch angeordneten und in tangentialer Umfangsrichtung zumindest teilweise umlaufenden Wellenabschnitt auf, dessen Aussenradius beginnend von einer jeweiligen Ruhestellung (Ruhestellung bei Rechtslauf oder Ruhestellung bei Linkslauf) mit zunehmenden Stellwinkel derart abnimmt, dass ein auf den Stellanschluss wirkendes Rückstellmoment im Wesentlichen gleich ist. Mit "im Wesentlich gleich" ist hier gemeint, dass sich das Rückstellmoment zwischen der jeweiligen Ruhestellung und der zugehörigen Betätigungsstellung des Stellantriebs um maximal 20%, vorzugsweise maximal 10%, unterscheidet.

Nach einer besonders vorteilhaften Ausführungsform umfasst die Bandfeder eine als Bandrolle ausgebildete Konstantkraftfeder. Die Konstantkraftfeder weist zumindest eine halbe Windung, vorzugsweise mehrere, (immer) direkt aneinanderliegende Windungen auf, abgesehen von einem im entspannten Zustand der Konstantkraftfeder möglicherweise vom Rollenumfang tangential wegweisenden freien Federende. Derartige Konstantkraftfedern werden auch als Rollfedern bezeichnet. Insbesondere ist die Bandfeder die Konstantkraftfeder selbst. Derartige Federn werden typischerweise zur Höheneinstellung von vertikalen Schiebefenstern und von Computer-Monitoren eingesetzt.

In diesem Fall sind auf besonders vorteilhafte Weise mittels einer einzigen kompakten und leichten Konstantkraftfeder ein besonders gleichmässiger Rücklauf im Reversbetrieb und eine einfache Drehrichtungsumkehr möglich. Durch die "ebene Federkennlinie" braucht der Motor nicht überdimensioniert werden, da das von ihm aufzubringende Antriebsmoment praktisch gleich ist. Es kann ein günstigerer Motor verwendet werden.

Eine ideale Feder mit konstanter Kraft ist definitionsgemäss eine Feder, bei der die Kraft, die sie über ihren Bewegungsbereich ausübt, eine Konstante ist, d.h. sie folgt nicht dem Hookeschen Gesetz. In Wirklichkeit liefern "Federn mit konstanter Kraft", also die hier betrachteten Konstantkraftfedern, keine tatsächliche konstante Kraft, und sie sind aus Materialien hergestellt, die dem Hookeschen Gesetz entsprechen. Im Allgemeinen sind solche Konstantkraftfedern als gerolltes Band aus Federstahl konstruiert, so dass die Feder im entspannten Zustand in aufgerollter Form mit immer direkt aneinanderliegenden Windungen vorliegt. Die Annäherung an die "konstante Kraft" erfolgt aus einem langen Hub und einer vorgespannten Ruhestellung, so dass die Anfangskraft nicht bei Null (Newton), sondern bei einem endlichen Wert beginnt.

Bei den betrachteten Konstantkraftfedern liegt das Verhältnis der Federkraft in der Betätigungsstellung zur Federkraft in der vorgespannten Ruhestellung im Bereich von 1 bis 1.1, vorzugsweise im Bereich von 1.02 bis 1.05. Die geringfügige Zunahme der Federkraft in der Betätigungsstellung resultiert von der durch das Abrollen des Federbands bedingten Abnahme des Radius. Dies kann durch eine entsprechende Zunahme der Federbandbreite zum freien Ende hin kompensiert werden.

Im Vergleich zu Triebfedern, bei denen die Windungen beim bestimmungsgemässen Einsatz der Triebfeder überwiegend nicht aneinander liegen, resultiert die beim Abrollen der betrachteten Konstantkraftfedern resultierende Federkraft ausschliesslich durch die Änderung des Biegeradius im Abrollpunkt. Bei den Triebfedern dagegen resultiert die beim Abrollen resultierende Federkraft durch eine Änderung des Biegeradius verteilt über einen Teil der Windungen hinweg. Aus diesem Grund sind die hier betrachteten Konstantkraftfedern im Vergleich zu Triebfedern vorteilhaft erheblich kompakter. Sie weisen zudem durch den Einsatz besonderer Federstähle, insbesondere von texturierten Kohlenstoff- und rostfreien Stählen, vorteilhaft eine deutlich höhere Federkraft auf.

Die betrachteten Konstantkraftfedern weisen einen Aussen- und Innendurchmesser auf, deren Verhältnis zueinander insbesondere im Bereich von 1.1 bis 1.5, vorzugsweise im Bereich von 1.2 bis 1.3, liegt. Das Verhältnis von Aussendurchmesser zur üblicherweise konstanten Bandrollenbreite liegt insbesondere im Bereich von 0.5 bis 3, vorzugsweise im Bereich 1 bis 2. Die als Bandrolle ausgebildeten Konstantkraftfedern weisen somit eine hohlzylindrische Bauform auf. Eine solche Konstantkraftfeder kann z.B. auf einer Trommel montiert sein, wobei vorzugsweise eineinhalb Wicklungen bei maximaler Abwicklung auf der Trommel verbleiben sollten. Konstantkraftfedern sind z.B. von den Firmen Kern-Liebers, Ming Tai Industrial Co., Hunter Springs oder Vulcan Springs erhältlich.

Nach einer weiteren Ausführungsform ist die Bandfeder radial zur Stellachse beabstandet und um eine parallel zur Stellachse verlaufende Rollenachse der Bandfeder drehbar gelagert. Die drehbare Lagerung um die Rollenachse kann z.B. durch eine Trommel erfolgen, auf der ein radial innenliegendes Bandfederende befestigt ist.

Die Bandfeder kann alternativ mit ihrem natürlichen, sich selbsttätig einstellenden, radial innenliegenden kleinsten Durchmesser auf einem gehäusefesten zylindrischen Lager drehbar gelagert sein. Das gehäusefeste Lager ist dann vorzugsweise derart bemessen, dass es die hohlzylindrische Bandfeder von innen begrenzt und führt. Eine gehäuseseitige Fixierung des dem radial aussenliegenden freien Federende der Bandfeder gegenüberliegenden Federende ist hier nicht erforderlich. Einer weiteren Ausführungsform zufolge weist die Bandfeder ein freies Bandrollenende auf, das um ein insbesondere linien- oder bandförmiges Verlängerungselement verlängert ist. Insbesondere ist das Verlängerungselement biegeschlaff. Es ist vorzugsweise zugfest ausgebildet. Das freie Ende dieses Verlängerungselements bildet nun das freie Federende der (verlängerten) Bandfeder. Ein solches biegeschlaffes, forminstabiles Bauteil weist einen niedrigen Elastizitätsmodul und eine geringe Dehnsteifigkeit auf. Eine bereits geringe Kraft- und Momentenbeanspruchung führt hier zu grossen Verformungen an einem solchen Bauteil. Das Verlängerungselement kann z.B. Band, ein Gurt, ein Seil, eine Litze oder eine Kette sein. Das Band, das Seil oder die Litze können aus einem Geflecht aus Metalldrähten oder Kunststofffasern, wie z.B. aus Stahldrähten, aus Nylonfasern oder aus Kevlarfasern, hergestellt sein.

Der besondere Vorteil liegt darin, dass die Federkraft für beide Drehrichtungen wegen der fehlenden federelastischen Eigenschaft des Verlängerungselements betragsmässig genau gleich und im Wesentlichen konstant ist. Ein drehrichtungsabhängiger Beitrag zum sich sonst einstellenden Rückstellmoment auf den Stellanschluss fehlt in diesem Fall.

Nach einer Ausführungsform ist das freie Federende an einem am radialen Aussenumfang des Wellenabschnitts gelagerten Befestigungspunkt befestigt. Der Wellenabschnitt umfasst somit diesen Befestigungspunkt. Der Befestigungspunkt z.B. kann ein Niet oder eine Schraube sein, welcher bzw. welche durch ein Befestigungsloch im oder am freien Ende der Bandfeder hindurchgreift. Vorzugsweise ist der Befestigungspunkt ein Scharnier, welches um eine parallel zur Stellachse verlaufende Schwenkachse drehbar ist. Dadurch ist eine einfache Befestigung des freien Bandfederendes am Aussenumfang des Wellenabschnitts möglich. Im Falle eines Scharniers ist vorteilhaft zudem eine leichtgängige Drehrichtungsumkehr durch ein Umschwenken des Scharniers möglich.

Einer weiteren Ausführungsform zufolge sind am Wellenabschnitt oder axial benachbart dazu zumindest zwei, vorzugsweise maximal drei oder vier Schaltnocken tangential zur Stellachse verteilt angeordnet. Der Stellantrieb weist ein (einziges), durch die jeweiligen Schaltnocken betätigbares elektrisches Schaltelement für eine Endlagenüberwachung des Stellelements aufweist. Das Schaltelement kann z.B. ein Mikroschalter, eine Lichtschranke oder ein Näherungsschalter sein. Jeder Schaltbetätigung kann somit vorteilhaft eine Ruhe- und Betätigungsstellung jeweils für beide Drehrichtungen zugeordnet werden. Die Schaltnocken können zum Justieren dieser "Endanschläge" in tangentialer Richtung um die Stellachse verschiebbar und fixierbar angeordnet sein.

Nach einer besonderen Ausführungsform weist der Wellenabschnitt, abgesehen von zumindest einem tangentialen Wellenabschnittsbereich, einen im Wesentlichen gleichen Wellenabschnittsradius auf. Im Vergleich dazu weist der zumindest eine tangentiale Wellenabschnittsbereich einen erhöhten Wellenabschnittsradius auf, wie z.B. erhöht um 10 bis 20%. Vorzugsweise ist dieser in Umfangsrichtung derart angeordnet, dass er in einer Betätigungs- oder Ruhestellung zugleich der am Wellenabschnitt angreifende Hebelpunkt für das freie Federende ist. Durch den erhöhten Wellenabschnittradius ist in der Betätigungs- oder Ruhestellung ein erhöhtes Schliessmoment realisierbar, wie z.B. zum Geschlossenhalten einer Rauchklappe in einem Lüftungskanal eines Gebäudes.

Nach einer besonders vorteilhaften Ausführungsform ist einer der Schaltnocken zugleich das am radialen Aussenumfang des Wellenabschnitts gelagerte Scharnier. Das Scharnier erfüllt somit zwei Funktionen, nämlich die Befestigung des freien Federendes und die Betätigung des Schaltelements für die Endlagenüberwachung.

Insbesondere ist die Bandfeder in der Ruhestellung zum Bereitstellen des Rückstellmoments bereits vorgespannt. Dadurch liegt auch noch in der Ruhestellung die volle Federkraft bzw. das volle Rückstellmoment an.

Einer weiteren Ausführungsform zufolge ist der am Stellelement angeordnete Wellenabschnitt im Bezug zur Stellachse des Stellelements radial zum Stellelement fixiert. Der Stellantrieb weist einen insbesondere manuell betätigbaren Ent- und Verriegelungsmechanismus zum Trennen und Wiederherstellen einer tangentialen Drehfixierung zwischen dem Stellelement zusammen mit dem Stellanschluss einerseits und dem Wellenabschnitt andererseits auf. Dadurch ist vorteilhaft eine Drehrichtungsumkehr des Stellelements (Recht-/Linkslauf) möglich. Um die Drehrichtung und das Rückstellmoment umkehren zu können, ist zunächst die Rückstellfeder vom Stellelement mit dem Stellanschluss und vom restlichen Getriebe zu entkoppeln, wie z.B. durch radiales Ausrücken eines Bolzens oder Riegels mittels Betätigung eines Schiebers oder Druckknopfes. Das Stellelement kann dann z.B. manuell mit geringem Kraftaufwand von der einen Endlage zur gegenüberliegenden Endlage bewegt werden. Typischerweise werden der Motor und das Getriebe des Stellantriebs beim Wechsel der Endlagen manuell mit angetrieben. Nach dem Endlagenwechsel wird die tangentiale Drehfixierung z.B. durch radiales Wiedereinrücken eines mit beispielhaften Schieber oder Druckknopf verbundenen Bolzens oder Riegels mittels Loslassens wieder hergestellt. Vorzugsweise weist der Wellenabschnitt einen radial innenliegenden und einen koaxial dazu radial aussenliegenden Teil auf. Der radial innenliegende Teil ist dabei fest mit dem Stellelement, d.h. mit dem Zahnsegment verbunden, welches wiederum im Eingriff mit einem Übertragungszahnrad ist.

Nach einer Ausführungsform weist der Stellantrieb einen insbesondere manuell betätigbaren Vorspannmechanismus zum Vorspannen der Bandfeder auf. Der Vorspannmechanismus kann ein direkt mit dem Wellenabschnitt im Eingriff befindliches Vorspannzahnrad als Teil des Vorspannmechanismus aufweisen. In diesem Fall weist der Wellenabschnitt an seinem Aussenumfang als weiteres Teil des Vorspannmechanismus eine entsprechende Aussenverzahnung auf. Das Verhältnis des verzahnten Aussendurchmessers des Vorspannzahnrads zum verzahnten Aussendurchmesser des Wellenabschnitts liegt im Sinne einer Untersetzung insbesondere in einem Bereich von 0.1 bis 0.5, vorzugsweise im Bereich von 0.2 bis 0.3. Das Vorspannzahnrad weist vorzugsweise eine zentrale Öffnung zum Einführen eines passenden Vorspannwerkzeugs, wie z.B. eines Spannschlüssels, auf. Dadurch ist ein manuelles Vorspannen des Stellanschlusses mit einigen Umdrehungen in die Gegenrichtung möglich. Der Spannschlüssel kann z.B. ein Sechskantschlüssel (Inbusschlüssel) und die zentrale Öffnung eine Innensechskantöffnung sein. Die Aussenverzahnung des Wellenabschnitts liegt vorzugsweise axial in einer anderen Ebene als der Aussenumfang des Wellenabschnitts für das Aufrollen des Federbands.

Der Ver- und Entriegelungsmechanismus und der Vorspannmechanismus können natürlich auch durch einen gemeinsamen Mechanismus realisiert sein. So kann z.B. das Vorspannzahnrad im verriegelten Zustand zugleich in eine gleich ausgeführte Aussenverzahnung des zuvor beschriebenen radial innenliegenden und des koaxial dazu radial aussenliegenden Teils des Wellenabschnitts im Eingriff sein. Im entriegelten Zustand kann das Vorspannzahnrad durch axiales Ausrücken nur im Eingriff mit dem radial aussenliegenden Teil des Wellenabschnitts sein.

Einer weiteren Ausführungsform zufolge weist das Stellelement ein Zahnrad, insbesondere ein Zahnsegment, als getriebeseitigen Abtrieb auf.

Schliesslich weist das Getriebe abtriebsseitig ein Abtriebszahnrad auf. Das Stellelement ist zumindest teilweise dann durch das Abtriebszahnrad gebildet.

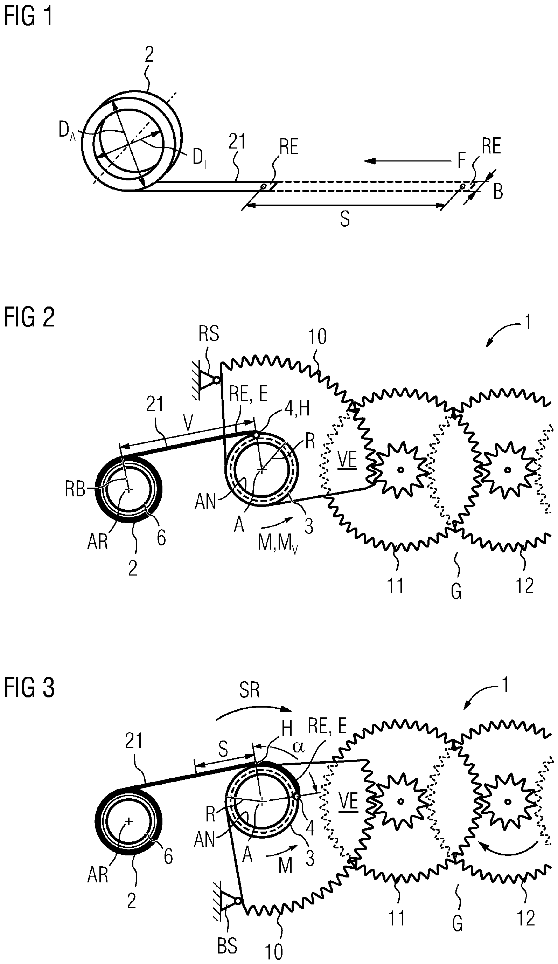

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und die in der Beschreibung erwähnten Merkmale jeweils einzeln für sich oder in beliebiger Kombination erfindungswesentlich sein. Elemente mit gleicher Funktion und Wirkungsweise sind in den Figuren 1 bis 15 jeweils mit denselben Bezugszeichen versehen. Es zeigen schematisch:
- FIG 1: ein Beispiel einer als Konstantkraftfeder ausgebildeten Bandfeder,
- FIG 2: eine beispielhafte, an einem Wellenabschnitt eines Stellelements eines erfindungsgemässen Stellantriebs in einer Ruhestellung tangential angreifende Konstantkraftfeder,
- FIG 3: den beispielhaften Stellantrieb gemäss FIG 2 in einer Betätigungsstellung,
- FIG 4: den beispielhaften Stellantrieb gemäss FIG 2 in der Ruhestellung und mit einem am Bandfederende angebrachten Verlängerungselement gemäss der Erfindung,
- FIG 5: den beispielhaften Stellantrieb gemäss FIG 4 in einer Betätigungsstellung,
- FIG 6 - FIG 8: den beispielhaften Stellantrieb gemäss FIG 4 mit stufenweiser Umkehrung der Drehrichtung von einem Rechtslauf zu einem Linkslauf mit Hilfe eines Entund Verriegelungsmechanismus und mit Hilfe eines Vorspannmechanismus gemäss der Erfindung,
- FIG 9 - FIG 11: ein Beispiel für einen Stellantrieb mit verschiede-nen Drehstellungen und Drehrichtungen und mit einem Scharnier als Wellenabschnittsbereich mit erhöhtem Wellenabschnittsradius gemäss der Erfindung,
- FIG 12 - FIG 15: ein Beispiel für einen Stellantrieb mit verschiede-nen Drehstellungen und Drehrichtungen und mit mehreren Schaltnocken zur Betätigung eines Schaltelements für eine Endlagenüberwachung gemäss der Erfindung.

FIG 1 zeigt ein Beispiel einer bereits als Konstantkraftfeder 2 ausgebildeten Bandfeder. Mit D_{A} ist der Aussendurchmesser, mit D_{I} der Innendurchmesser und mit B die Breite der gezeigten Bandfeder 2 bezeichnet. Die Bandfeder ist als Bandrolle ausgebildet. Mit dem Bezugszeichen 21 ein Federband der Bandrolle 2 bezeichnet, welches vom Aussenumfang der Bandrolle 2 tangential von der Bandrolle 2 weg zeigt. Im vorliegenden Beispiel ist ein mit RE bezeichnetes Bandrollenende um einen gestrichelt dargestellten Federweg S weiter abgerollt, wobei in idealer Weise eine konstante Federkraft F erhalten bleibt.

FIG 2 zeigt eine beispielhafte, an einem Wellenabschnitt 3 eines Stellelements 10 eines erfindungsgemässen Stellantriebs 1 in einer Ruhestellung RS tangential angreifende Konstantkraftfeder 2. Der Stellantrieb 1 weist dabei ein nicht weiter gezeigtes Antriebselement, wie z.B. einen Elektromotor, ein Getriebe G sowie das Stellelement 10 auf, das seinerseits einen Stellanschluss AN umfasst. Der Stellanschluss AN ist zum Anschliessen einer Klappe oder eines Ventils vorgesehen. Das Antriebselement ist zum Antreiben des Stellelements 10 um eine Stellachse A vorgesehen. Das Getriebe G ist somit mechanisch mit dem Stellelement 10 wirkverbunden. Weiterhin umfasst das Getriebe G mehrere miteinander kämmende Zahnräder 11, 12. Das Zahnrad 11 ist zudem im Eingriff mit dem hier als Zahnsegment ausgebildeten Stellelement 10. Mit VE ist ferner eine Verzahnungsebene bzw. Wirkebene bezeichnet, in der sich sämtliche Zahnräder 10, 11 sowie das Zahnsegment 10 befinden. In der FIG 2 liegt in der gezeigten Ruhestellung RS das Zahnsegment 10 an einem Endanschlag an.

Weiterhin weist der Stellantrieb 1 eine am Stellelement 10 angreifende Rückstellfeder 2 auf, welche mit dem Stellelement 10 zum Bereitstellen eines auf das Stellelement 10 einwirkenden Rückstellmoments M mechanisch wirkverbunden ist. Im vorliegenden Beispiel weist die als Bandrolle ausgestaltete Rückstellfeder 2, also die Konstantkraftfeder 2, durch das teilweise Abrollen des Federbandes 21 bereits eine Vorspannung bzw. ein Vorspannmoment M_{V} auf. Dieses entspricht bei erfindungsgemässer Verwendung der Konstantkraftfeder 2 als Rückstellfeder 2 im Wesentlichen auch dem Rückstellmoment M im Stellbetrieb. Generell liegt bei der vorliegenden Erfindung das Verhältnis einer entsprechenden Vorspannstrecke V einer Bandrolle 2 zu einem Aussenradius RB dieser Bandrolle 2 im Bereich von 1 bis 8, vorzugsweise im Bereich von 3 bis 6.

Gemäss der Erfindung weist das Stellelement 10 nun den zur Stellachse A zentrisch angeordneten und in tangentialer Umfangsrichtung zumindest teilweise umlaufenden Wellenabschnitt 3 auf. Zudem ist tangential an dem Wellenabschnitt 3 ein freies Federende E der Bandfeder 2 befestigt. Das freie Federende E ist im vorliegenden Beispiel ein Befestigungspunkt, wie z.B. ein Niet oder eine Schraubverbindung. Der zumindest teilweise umlaufende Wellenabschnitt 3 ist weiter im vorliegenden Beispiel vollständig umlaufend. Er ist weiter beispielhaft als zylindrische Hohlwelle ausgebildet mit einer zentralen, nicht weiter bezeichneten Durchgangsöffnung. Letztere verläuft auch durch das Stellelement 10 hindurch, an dem diese Hohlwelle 3 (fest) angeordnet ist. Das Stellelement 10 und die Hohlwelle 3 können auch einstückig sein.

In der FIG 2 greift das Federband 21 der Konstantkraftfeder 2 an dem Befestigungspunkt 4 an, der zugleich auch ein Hebelpunkt H. Mit anderen Worten wird die Konstantkraftfeder 2 mit einem dem Aussenradius R des Wellenabschnitts 3 entsprechenden Hebelweg beim Antrieb des Zahnsegments 10 im Uhrzeigersinn gespannt und entlang des Aussenumfangs des Wellenabschnitts 3 aufgerollt. Das Federband 21 wird dabei von der Bandrolle 2 abgerollt. Die Bandrolle 2 ist beispielhaft selbst auf einer Trommel 6 montiert. Mit RB ist der Aussenradius der Bandrolle 2 und mit AR die Rollenachse der Trommel 6 bzw. der Bandrolle 2 bezeichnet. Die Bandfeder 2 ist radial zur Stellachse A beabstandet und um die zur Stellachse A parallel verlaufende Rollenachse AR drehbar gelagert. Vorzugsweise weist die Bandrolle 2 noch mindestens eine halbe Windung im maximal abgewickelten Zustand, das heisst bei Erreichen der Betätigungsstellung, auf. Vorzugsweise sollten noch ca. anderthalb Wicklungen in der Betätigungsstellung verbleiben. Die Wicklungen liegen dabei immer aneinander.

FIG 3 zeigt den beispielhaften Stellantrieb 1 gemäss FIG 2 in einer Betätigungsstellung BS. Im Vergleich zur vorherigen FIG 2 wurde nun das Stellelement 10 mittels des angetriebenen Getriebes G um den gezeigten Stellwinkel α von der Ruhestellung RS in die Betätigungsstellung BS bewegt. Mit SR ist hier eine erste Stellrichtung, d.h. ein Rechtslauf, bezeichnet. Mit S ist der Federweg bezeichnet, um den das Federband 21 der gezeigten Konstantkraftfeder 2 durch die Drehung des Wellenabschnitts 3 von dieser abgerollt worden ist. Dabei entspricht der Federweg S betragsmässig in etwa der Bogenlänge des am Wellenabschnitt 3 aufgewickelten Federbands 21. Die Bogenlänge selbst ergibt sich aus dem Produkt des Stellwinkels α und dem Aussenradius R des Wellenabschnitts 3.

FIG 4 zeigt den beispielhaften Stellantrieb 1 gemäss FIG 2 in der Ruhestellung RS und mit einem am Bandfederende RE angebrachten Verlängerungselement 22 gemäss der Erfindung. Auch in diesem Fall weist die Rückstellfeder 2 durch das teilweise Abrollen des Federbandes 21 eine Vorspannung auf. Die so verlängerte Rückstellfeder 2 wird im folgenden als verlängerte Konstantkraftfeder 2' bezeichnet. Dabei weist die verlängerte Konstantkraftfeder 2' ein freies Bandrollenende RE auf, das um ein linien- oder bandförmiges Verlängerungselement 22 verlängert ist. Dieses Verlängerungselement 22 ist insbesondere biegeschlaff und zugfest ausgeführt. Es kann z.B. ein Band, ein Gurt, ein Seil, eine Litze oder eine Kette sein. Somit ist die Federkraft wegen der fehlenden federelastischen Eigenschaft des Verlängerungselements 22 für beide Drehrichtungen SR, SL genau gleich und im Wesentlichen konstant.

FIG 5 zeigt den beispielhaften Stellantrieb 1 gemäss FIG 4 in einer Betätigungsstellung BS. Wie die FIG 5 zeigt, ist in dieser Stellung BS nur das Verlängerungselement 22 auf dem Wellenabschnitt 3 aufgewickelt.

Die Figuren FIG 6 bis FIG 8 zeigen den beispielhaften Stellantrieb 1 gemäss FIG 4 nun in stufenweiser Umkehrung der Drehrichtung von einem Rechtslauf SR zu einem Linkslauf SL mit Hilfe eines Ent- und Verriegelungsmechanismus EVM und mit Hilfe eines Vorspannmechanismus VSM gemäss der Erfindung.

In der FIG 6 ist gezeigt, wie die tangentiale Drehfixierung zwischen dem Stellelement 10 zusammen mit dem Stellanschluss SA einerseits und dem Wellenabschnitt 3 andererseits aufgehoben wird. Die Rückstellfeder 2 wird somit von dem Stellelement 10 und von dem restlichen Getriebe G entkoppelt. Der eingetragene gerade Pfeil symbolisiert beispielhaft ein radiales Ausrücken eines nicht weiter gezeigten Drehfixierungselements des Ent- und Verriegelungsmechanismus EVM. Das Drehfixierungselement kann z.B. ein Bolzen oder Riegel sein. Das Drehfixierungselement gibt mittels eines vorzugsweise am Gehäuse des Stellantriebs 10 betätigbaren Freigabeelements die Drehfixierung zwischen einem radial innenliegenden, fest mit dem Wellenabschnitt 3 verbundenen Teil 32 und einem koaxial dazu radial aussenliegenden Teil 31 des Wellenabschnitts 3 frei. Das Freigabeelement kann z.B. ein Schieber, Druckknopf oder Taster sein. Mit dem Betätigen und Festhalten des beispielhaften Freigabeelements dreht sich der Wellenabschnitt 3 bzw. dessen radial aussenliegender Teil 31, durch die wirkende Vorspannung nun selbsttätig in Linksrichtung, d.h. in die in FIG 6 gezeigte Zwischen- oder Neutralstellung. Das Stellelement 10 mit dem damit festverbundenen radial innenliegenden Teil 32 des Wellenabschnitts 3 selbst verbleibt immer noch in der gestrichelt dargestellten Drehstellung. Das entkoppelte Stellelement 10 kann nun z.B. händisch in die durchgezogen dargestellte Drehstellung bewegt werden, wobei das Getriebe G und der nicht weitergezeigte Motor mitbewegt werden. Alternativ kann dann der Motor eingeschaltet werden, um das Stellelement 10 in die durchgezogen dargestellte Drehstellung zu bewegen.

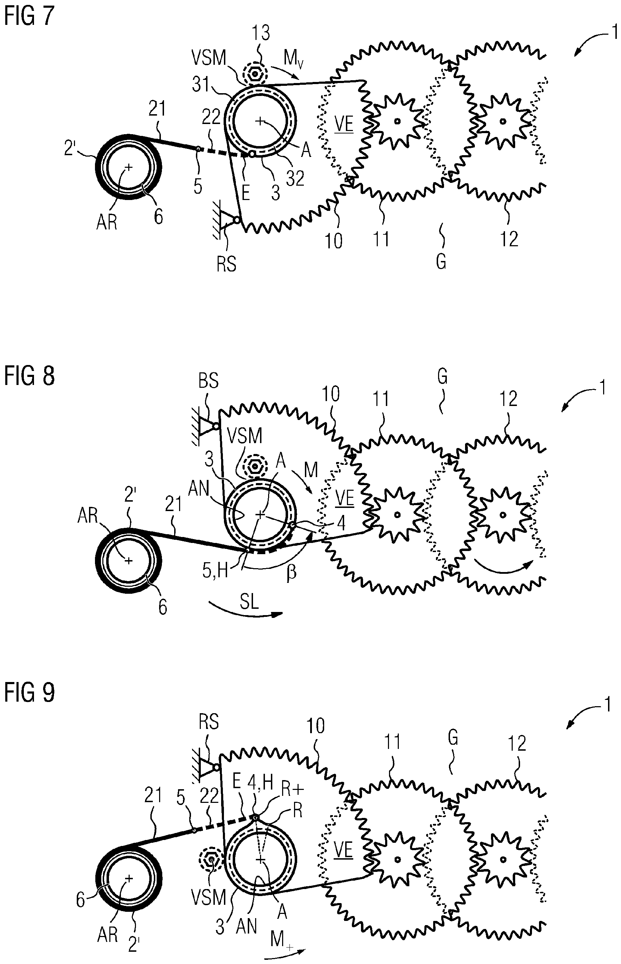

Entsprechend der nachfolgenden FIG 7 wird mittels eines Vorspannzahnrads 13 als Teil eines Vorspannmechanismus VSM der radial aussenliegende Teil 31 des Wellenabschnitts 3 im Gegenuhrzeigersinn gedreht. Dadurch wird das am Aussenumfang des Wellenabschnitts 3 angebrachte freie Ende E der Bandfeder 2 an die gezeigte untere Position unter Aufbringung einer Vorspannung bewegt. Nach dieser Drehrichtungsänderung wird die tangentiale Drehfixierung im Wellenabschnitt 3 wieder hergestellt, wie z.B. durch radiales Wiedereinrücken des mit dem Schieber oder Druckknopf verbundenen Bolzens oder Riegels. Mit der Umkehrung der Stelldrehrichtung von einem Rechtslauf SR auf einen Linkslauf SL kehrt sich auch die Funktion der Endlagenerfassung um. Mit anderen Worten wird aus der Ruhestellung RS nun die Betätigungsstellung RB und umgekehrt. Dies ist durch geeignete Auswertung mittels einer Steuereinheit des Stellantriebs 1 zu berücksichtigen.

Die FIG 8 zeigt schliesslich das Stellelement 10 nun im Linkslauf SL in der Betätigungsstellung BS. Der gezeigte Stellwinkel β entspricht betragsmässig typischerweise dem Stellwinkel α beim Rechtlauf SR des Stellantriebs 1.

Die Figuren FIG 9 bis FIG 11 zeigen ein Beispiel für einen Stellantrieb 1 mit verschiedenen Drehstellungen RS, BS und Drehrichtungen SR, SL und mit einem Scharnier 4 als Wellenabschnittsbereich 3 mit erhöhtem Wellenabschnittsradius R+ gemäss der Erfindung.

Im Vergleich dazu ist nun das freie Federende E der Bandfeder 2 an einem am radialen Aussenumfang des Wellenabschnitts 3 gelagerten Scharnier 4 befestigt. Letzteres ist um eine parallel zur Stellachse A verlaufende Schwenkachse drehbar. Dadurch ist ein leichtgängiges, selbsttätiges Umschwenken des Scharniers 4 bei einer Drehrichtungsumkehr möglich.

Das freie Federende E der Bandfeder 2 kann z.B. an einer hohlzylindrischen Hülse befestigt sein. Die Längssymmetrieachse der Hülse liegt in der Ebene des Federendes 21 bzw. in der Ebene des vorzugsweise bandförmigen Verlängerungselements 22. Zusätzlich ist die Hülse derart am freien Federende E befestigt, dass die Längssymmetrieachse der Hülse senkrecht zur Richtung der Federkraft F ist. Die Hülse kann dann auf einfache Weise zwischen zwei sich gegenüberliegenden Lagern des Scharniers 4 eingeschoben und durch einen geeigneten Sicherungsstift befestigt werden, der sich durch beide Lager und durch die Hülse hindurch mit wenig Spiel erstreckt.

Der in den Figuren FIG 9 bis FIG 11 gezeigte Wellenabschnitt 3 weist, abgesehen von einem tangentialen Wellenabschnittsbereich, der mit dem Scharnier 4 korrespondiert, einen im Wesentlichen gleichen Wellenabschnittsradius R auf. Im Vergleich dazu weist der tangentiale Wellenabschnittsbereich 4 bzw. das Scharnier einen erhöhten Wellenabschnittsradius R+ auf. Im vorliegenden Beispiel ist der tangentiale Wellenabschnittsbereich 4 derart angeordnet, dass er in den gezeigten Ruhestellung RS zugleich der am Wellenabschnitt 3 angreifende Hebelpunkt H für das freie Federende E ist. Durch den erhöhten Wellenabschnittradius R+ resultiert in der gezeigten Ruhestellung RS wegen des grösseren Hebels, d.h. wegen des erhöhten Wellenabschnittradius R+, auch ein erhöhtes Schliessmoment M₊. In dieser sicheren stromlosen Ruhestellung RS ist dann z.B. eine Rauchklappe oder ein Ventil mit einem höheren erhöhten Schliessmoment M₊ beaufschlagt.

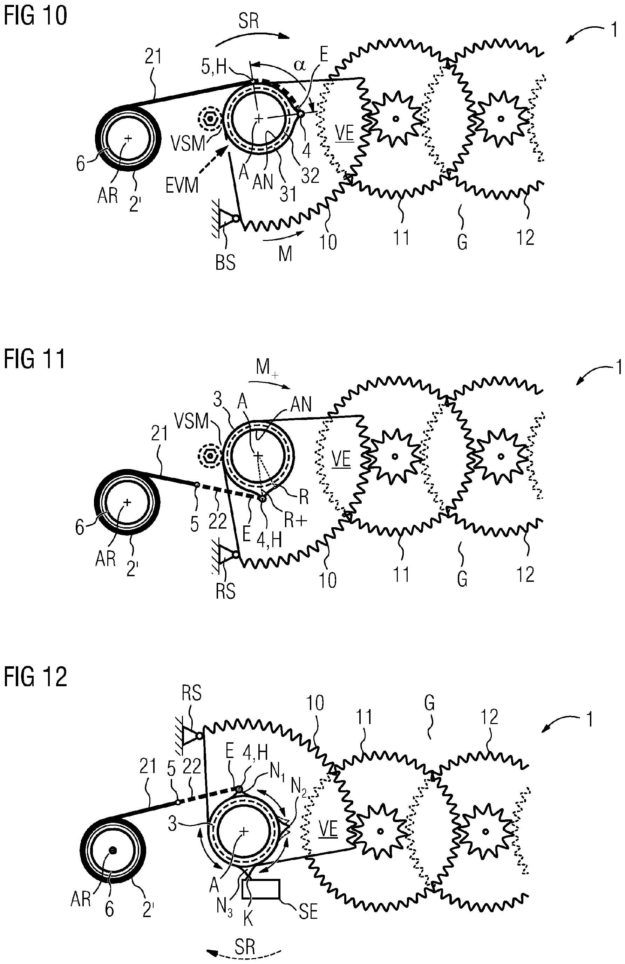

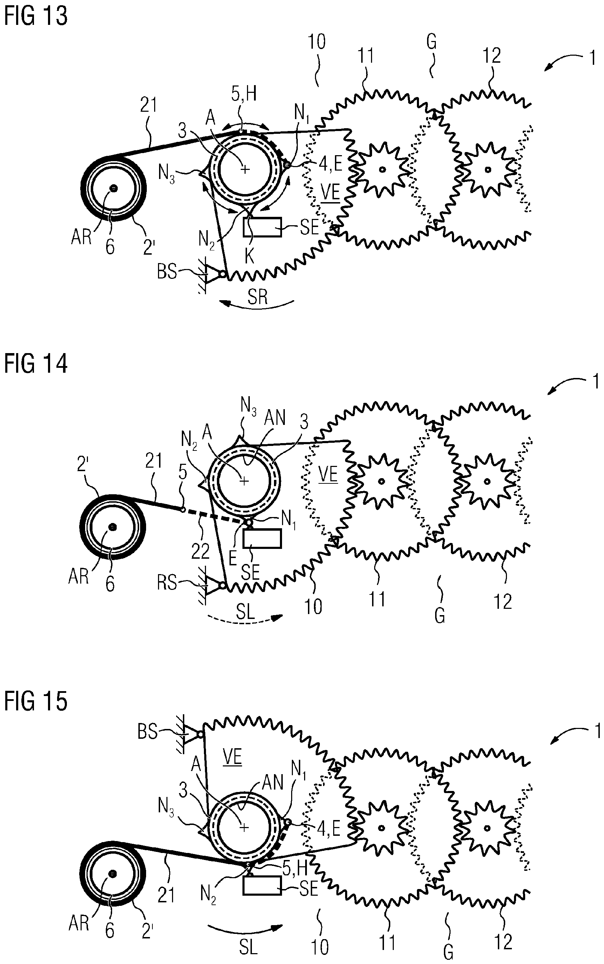

Die Figuren FIG 12 bis FIG 15 zeigen ein Beispiel für einen Stellantrieb 1 mit verschiedenen Drehstellungen RS, BS und Drehrichtungen SR, SL und mit mehreren Schaltnocken N₁ bis N₃ zur Betätigung eines Schaltelements SE für eine Endlagenüberwachung gemäss der Erfindung. Die Drehstellungen in den Figuren FIG 12 und FIG 14 entsprechen in ihrer Funktion im Wesentlichen denen der vorherigen Figuren FIG 9 und FIG 11. Die Figuren FIG 13 und FIG 15 sind im Vergleich zu den Figuren FIG 12 und FIG 14 von der jeweiligen Ruhestellung RS in die entsprechende Betätigungsstellung BS bewegt.

Bei diesem Beispiel sind am Wellenabschnitt 3 drei Schaltnocken N₁ - N₃ tangential zur Stellachse A verteilt angeordnet. Der Stellantrieb 1 weist hier vorteilhaft nur ein einziges, durch die jeweiligen Schaltnocken N₁ - N₃ betätigbares elektrisches Schaltelement SE für eine Endlagenüberwachung des Stellelements 10 auf. Das Schaltelement SE kann z.B. ein Mikroschalter oder ein Näherungssensor sein. Jeder Schaltbetätigung kann somit vorteilhaft eine Ruhe- und Betätigungsstellung RS, BS jeweils für beide Drehrichtungen SR, SL zugeordnet werden. Die Schaltnocken N₁ - N₃ können zum Justieren der "Endanschläge" in tangentialer Richtung um die Stellachse A verschiebbar und fixierbar angeordnet sein. Im Fall eines hier gezeigten 90°-Stellwinkelbereichs kann auf einen der sonst vier erforderlichen Kombinationen aus Drehrichtung (Rechtslauf, Linkslauf) und Endstellungen (Ruhestellung und Betätigungsstellung) verzichtet werden. Der Grund hierfür ist, dass der Schaltnocken N₂ sowohl in der Betätigungsstellung BS und beim Rechtslauf (FIG 13) wie auch in der Betätigungsstellung BS und beim Linkslauf (FIG 15) betätigt wird.

Im Beispiel der Figuren FIG 12 bis FIG 15 ist einer der Schaltnocken, hier Schaltnocke N₁, zugleich das am radialen Aussenumfang des Wellenabschnitts 3 gelagerte Scharnier 4.

### Bezugszeichenliste

- 1: Stellantrieb
- 2: Rückstellfeder, Bandfeder, Konstantkraftfeder
- 2': verlängerte Konstantkraftfeder
- 3: Wellenabschnitt, tangentialer Wellenabschnitt
- 4: Befestigungspunkt, Scharnier, , Niet, Gelenk, tangentialer Wellenabschnitt
- 5: Verbindungselement, Niet, Schweissnaht, Klebepunkt
- 6: Nabe, Trommel
- 10 - 12: Zahnräder
- 10: Abtriebszahnrad, Zahnsegment
- 11, 12: Übertragungszahnrad
- 13: Vorspannzahnrad
- 21: (Stahl-)Federband mit radialer Vorspannung
- 22: Verlängerungselement, Zugband, Kette, Seil
- 31: radial innenliegender Teil des Wellenabschnitts
- 32: radial innenliegender Teil des Wellenabschnitts

- A: Stellachse
- AN: Stellanschluss, Stellelement
- AR: Rollenachse
- B: Bandbreite
- D_{A}: Aussendurchmesser
- D_{I}: Innendurchmesser
- E: Federende, freies Federende
- EVM: Ent- und Verriegelungsmechanismus
- G: Getriebe
- H: Hebelpunkt
- K: Taster, Schaltbetätigungselement
- M: Rückstellmoment
- M_{V}: Rückstellmoment bei Vorspannung
- M₊: erhöhtes Rückstellmoment
- N₁-N₄: Schaltnocken, tangentialer Wellenabschnitt
- R: Aussenradius des Wellenabschnitts, Wellenradius
- RB: Aussenradius der Bandrolle
- RE: Bandrollenende, freies Federende
- R+: erhöhter Aussenradius des Wellenabschnitts
- S: Federweg
- SE: elektrisches Schaltelement
- SR: erste Stellrichtung, Rechtslauf
- SL: zweite Stellrichtung, Linkslauf
- VE: Verzahnungsebene
- VSM: Vorspannmechanismus

- α, β: erster, zweiter Stellwinkel, Stellwinkelbereich
- π: Vorspannwinkel

## Patentansprüche

1. Stellantrieb, aufweisend ein Antriebselement, ein Getriebe (G) sowie ein Stellelement (10) mit einem Stellanschluss (AN), wobei das Antriebselement zum Antreiben des Stellelements (10) um eine Stellachse (A) vorgesehen ist sowie durch das Getriebe (G) mechanisch mit dem Stellelement (10) wirkverbunden ist, wobei der Stellantrieb eine am Stellelement (10) angreifende Rückstellfeder (2, 2') aufweist, welche mit dem Stellelement (10) zum Bereitstellen eines auf das Stellelement (10) einwirkenden Rückstellmoments (M) mechanisch wirkverbunden ist, **dadurch gekennzeichnet,**
- **dass** das Stellelement (10) einen zur Stellachse (A) zentrisch angeordneten und in tangentialer Umfangsrichtung zumindest teilweise umlaufenden Wellenabschnitt (3) aufweist,
- **dass** die Rückstellfeder eine Bandfeder (2, 2') umfasst und
- **dass** tangential an dem Wellenabschnitt (3) ein freies Federende (E) der Bandfeder (2, 2') befestigt ist.

2. Stellantrieb nach Anspruch 1, wobei die Bandfeder eine als Bandrolle ausgebildete Konstantkraftfeder (2, 2') mit zumindest einer halben Windung, vorzugsweise mit mehreren direkt aneinanderliegende Windungen umfasst.

3. Stellantrieb nach Anspruch 1 oder 2, wobei die Bandfeder (2, 2') radial zur Stellachse (A) beabstandet ist und um eine parallel zur Stellachse (A) verlaufende Rollenachse (RA) der Bandfeder (2, 2') drehbar gelagert ist.

4. Stellantrieb nach einem der vorherigen Ansprüche, wobei die Bandfeder (2') ein freies Bandrollenende (RE) aufweist, das um ein insbesondere linien- oder bandförmiges, biegeschlaffes, zugfestes Verlängerungselement (22) verlängert ist und wobei das freie Ende dieses Verlängerungselements (22) nun das freie Federende (E) der Bandfeder (2') bildet.

5. Stellantrieb nach einem der vorherigen Ansprüche, wobei das freie Federende (E) an einem am radialen Aussenumfang des Wellenabschnitts (3) gelagerten Befestigungspunkt (4), insbesondere an einem Scharnier, befestigt ist.

6. Stellantrieb nach einem der vorherigen Ansprüche,
- wobei am Wellenabschnitt (3) oder axial benachbart dazu zumindest zwei, vorzugsweise maximal drei oder vier Schaltnocken (N₁- N₃), tangential zur Stellachse (A) verteilt angeordnet sind, und
- wobei der Stellantrieb (1) ein durch die jeweiligen Schaltnocken (N₁- N₃) betätigbares elektrisches Schaltelement (SE) für eine Endlagenüberwachung des Stellelements (10) aufweist.

7. Stellantrieb nach Anspruch 6, wobei der Wellenabschnitt (3), abgesehen von zumindest einem tangentialen Wellenabschnittsbereich (4, N₁ - N₃), einen im Wesentlichen gleichen Wellenabschnittsradius (R) aufweist und wobei im Vergleich dazu der zumindest eine tangentiale Wellenabschnittsbereich (4, N₁ - N₃) einen erhöhten Wellenabschnittsradius (R+) aufweist.

8. Stellantrieb nach Anspruch 6 und 7, wobei einer der Schaltnocken (N₁) zugleich ein am radialen Aussenumfang des Wellenabschnitts (3) gelagertes Scharnier (4) ist.

9. Stellantrieb nach einem der vorherigen Ansprüche, wobei das Stellelement (10) innerhalb eines vorgegebenen Drehwinkelbereichs (α, β) um seine Stellachse (A) drehbar zwischen einer Ruhestellung (RS) und einer Betätigungsstellung (BS) angeordnet ist.

10. Stellantrieb nach Anspruch 9, wobei die Bandfeder (2, 2') in der Ruhestellung (RS) zum Bereitstellen des Rückstellmoments (M, Mᵥ) bereits vorgespannt ist.

11. Stellantrieb nach einem der vorherigen Ansprüche, wobei der am Stellelement (10) angeordnete Wellenabschnitt (3) im Bezug zur Stellachse (A) des Stellelements (10) radial zum Stellelement (10) fixiert ist und wobei der Stellantrieb (1) einen insbesondere manuell betätigbaren Ent- und Verriegelungsmechanismus (EVM) zum Trennen und Wiederherstellen einer tangentialen Drehfixierung zwischen dem Stellelement (10) zusammen mit dem Stellanschluss (AN) und dem Wellenabschnitt (3) aufweist.

12. Stellantrieb (1) nach einem der vorherigen Ansprüche, wobei der Stellantrieb (1) einen insbesondere manuell betätigbaren Vorspannmechanismus (VSM) zum Vorspannen der Bandfeder (2, 2') aufweist.

13. Stellantrieb nach einem der vorherigen Ansprüche, wobei das Stellelement (10) ein Zahnrad, insbesondere ein Zahnsegment (10), als getriebeseitigen Abtrieb aufweist.

14. Stellantrieb nach Anspruch 13, wobei der Wellenabschnitt (3) des Zahnrads oder des Zahnsegments (10) axial zu dessen Verzahnungsebene (VE) beabstandet ist.

15. Stellantrieb nach einem der vorangegangenen Ansprüche, wobei das Getriebe (G) abtriebsseitig ein Abtriebszahnrad (12) aufweist und wobei das Stellelement (10) zumindest teilweise durch das Abtriebszahnrad (12) gebildet ist.
